# EUROPÄISCHE PATENTSCHRIFT

(11) **EP 2 488 844 B1**
(45) Veröffentlichungstag und Bekanntmachung des Hinweises auf die Patenterteilung: **23.12.2015**
(21) Anmeldenummer: 10768002.7
(22) Anmeldetag: 11.10.2010
(51) Int. Cl.: G01L 11/06

(54) **ULTRASCHALLBASIERTE MESSVORRICHTUNG UND -VERFAHREN**
ULTRASONIC MEASURING DEVICE AND MEASURING METHOD
DISPOSITIF ET PROCÉDÉ DE MESURE BASÉS SUR LES ULTRASONS

(30) Priorität: 14.10.2009 DE 102009045663; 11.10.2010 DE 102010042279
(43) Veröffentlichungstag der Anmeldung: 22.08.2012
(73) Patentinhaber: Robert Bosch GmbH, 70442 Stuttgart (DE)
(72) Erfinder: DOERING, Christian, 70563 Stuttgart (DE); GRAF, Juergen, 70597 Stuttgart (DE); HENRICI, Fabian, 70195 Stuttgart (DE)
(86) Internationale Anmeldenummer: PCT/EP2010/065218
(87) Internationale Veröffentlichungsnummer: WO 2011/045283

(56) Entgegenhaltungen:
- EP-A2- 0 957 373
- EP-A2- 1 308 750
- DE-A1-102005 009 818

## Beschreibung

Die Erfindung geht aus von einer ultraschallbasierten Messvorrichtung nach der Gattung des Anspruchs 1 und von einem ultraschallbasierten Messverfahren nach der Gattung des Anspruchs 12.

Die Verwendung von Ultraschall zur Längenbestimmung z.B. eines Festkörpers ist in der Praxis bei einer Vielzahl von Fragestellungen, wie etwa auf dem Gebiet der zerstörungsfreien Werkstoffprüfung, bekannt. Dabei wird in vielen Fällen die sogenannte Puls-Echo Methode genutzt, bei der aus der Laufzeit zwischen Aussenden eines Ultraschall-Pulses in einen Messkörper und Empfang des z.B. an der Rückwand des Messkörpers reflektierten Puls-Echos auf die Länge des Körpers geschlossen wird.

Hierzu wird eine Präzisionszeitbasis als Referenz für die Zeitmessung benötigt, wobei diesbezüglich in der Praxis vornehmlich Quarzoszillatoren zur Anwendung kommen. Außerdem muss die Schallgeschwindigkeit im zu untersuchenden Körper bekannt sein, oder durch eine Referenzmessung an einem Körper bekannter Länge und gleichen Materials bestimmt werden.

Bei allen laufzeitbasierten Distanzmessungen ist jedoch der Temperaturgang problematisch, da dieser den eigentlich zu messenden Effekt um ein Vielfaches übersteigen kann, wodurch die Messgröße mitunter bis zur Unbrauchbarkeit verfälscht werden kann.

Daher muss die Temperatur des Messkörpers bei vielen Anwendungen bis auf ein zehntel oder hundertstel Grad genau bestimmt werden. Diese Messgenauigkeit bei unvermeidbaren Schwankungen von Fertigungsparametern über die gesamte Lebensdauer einer Temperaturmessvorrichtung zu garantieren, ist praktisch unmöglich bzw. nur zu nicht vertretbaren Kosten möglich.

DE 102005009818 offenbart die Erfassung der Temperatur in einem Ultraschall drucksensor mittels einer Referenzstrecke außerhalb des Messkörpers jedoch entstehen dadurch Temperaturunterschiede zwischen Meßkörper und Referenzstrecke.

Aufgabe der vorliegenden Erfindung ist es demgegenüber, eine gattungsgemäße Messvorrichtung und -verfahren anzugeben, die eine von temperaturbedingten Messstrecken- bzw. Laufzeitänderungen der Ultraschallsignale unabhängige Längenmessung auf einfache und kostengünstige Weise erlauben.

### Vorteile der Erfindung

Diese Aufgabe wird erfindungsgemäß gelöst durch eine Messvorrichtung mit den im Anspruch 1 angegebenen Merkmalen.

Erfindungsgemäß ist im Messkörper eine Referenzstrecke aus dem gleichen Material wie die Messstrecke vorgesehen, welche nicht dem am Messende herrschenden Messdruck ausgesetzt ist, aber durch enge räumliche Anordnung die gleiche Temperatur wie die Messstrecke aufweist. Die Ultraschall-Laufzeit durch die Referenzstrecke mit bekannter Länge dient als Zeitbasis und ersetzt die normalerweise verwendete Präzisionsbasis (Quarz). Diese Referenzlaufzeit skaliert mit der Temperatur. Diese Skalierung entspricht genau der Skalierung der Messlaufzeit durch die mit Druck beaufschlagte Messstrecke durch die Temperatur. Wird die Messlaufzeit durch Quotientenbildung auf die Referenzstrecke bezogen, erhält man ein temperaturunabhängiges Druckmesssignal. Druckbedingte Laufzeitänderungen der Ultraschallsignale über die Messstrecke können so unabhängig vom Temperaturgang der Messstrecke erfasst werden, wodurch eine temperaturkompensierte und daher zuverlässige Bestimmung des Messdrucks möglich ist. Dadurch ist selbst ein Erfassen von sehr geringen druckbedingten Verformungen in einem weiten Temperaturbereich möglich, wie diese beispielsweise im Bereich der Kraftfahrzeugtechnik mit dort typischerweise anzutreffenden Temperaturen von minus 40° bis plus 150°C auftreten. Insoweit sind insbesondere auch Anwendungen bei der Messung des Betriebsmitteldrucks eines Einspritzsystems (z.B. Common-Rail) oder des Hydrauliksystems einer Bremsanlage möglich. Dabei ist eine gesonderte Einrichtung zur Temperaturerfassung überflüssig und eine standardisierte 1-Punkt-Kalibrierung des Systems in der Praxis grundsätzlich ausreichend.

Die erfindungsgemäße Messvorrichtung hat folgende Vorteile:
- Hochgenaue Temperaturkompensation mit geringem Mehraufwand;
- Wegfall der nicht mehr benötigten Zeitbasis (Quarz) durch Ersetzen einer Absolutmessung durch eine Relativmessung, und damit Kosteneinsparung;
- Nur Einpunkt-Temperaturabgleich notwendig;
- Zusätzlich erhält man eine präzise Temperaturmessung.

Nach einer Weiterbildung der Erfindung ist die Referenzfläche durch eine End- oder Grenzfläche des Messkörpers, insbesondere durch einen Einschnitt, eine Einschnürung und/oder eine Kante im Messkörper, gebildet. Die Grenzfläche kann durch Umformen, Trennen, Fügen oder eine Veränderung der Stoffeigenschaften innerhalb des Messkörpers gebildet sein. Dadurch können Referenzstrecken definierter Länge in praktisch jedem Material bzw. Bauteil auf einfache und kostengünstige Weise erzeugt werden, was im Hinblick auf die Breite der Einsatzmöglichkeiten der Vorrichtung von Interesse ist. Zudem kann der Reflektionsgrad der Grenzschicht gegenüber Ultraschallwellen bedarfsgerecht eingestellt werden.

Besonders bevorzugt weisen die von den Ultraschall-Messsignalen durchlaufene Messstrecke und die von den Referenz-Ultraschallsignalen durchlaufene Referenzstrecke im Betrieb der Messvorrichtung die gleiche Temperatur auf. Dazu sollten die Messstrecke und die Referenzstrecke möglichst nahe nebeneinander verlaufen und der Messkörper aus einem hochwärmeleitfähigem Material, wie z.B. Stahl, Aluminium oder Kupfer, gebildet sein.

Die erfindungsgemäße Messvorrichtung umfasst vorzugsweise eine Auswerteeinheit, die anhand der gemessenen Laufzeit oder Phasenverschiebung eines am Messende reflektierten Ultraschall-Messsignals und der gemessenen Laufzeit oder Phasenverschiebung eines an der Referenzfläche reflektierten Ultraschall-Referenzsignals die temperaturkompensierte Laufzeit oder Phasenverschiebung des Messsignals, und daraus bei bekannter Schallgeschwindigkeit des Messkörpers die temperaturkompensierte Länge des Messkörpers und/oder anhand bekannter Längen-Messdruck-Referenzkurven den am Messende herrschende Messdruck, ermittelt.

Weiterhin bevorzugt weist der Messkörper außerhalb seines messdruckbeaufschlagbaren Messendes mindestens zwei nicht-messdruckbeaufschlagte Referenzflächen auf, an denen vom mindestens einen Ultraschallsender ausgesandte Ultraschall-Referenzsignale zum mindestens einen Ultraschallempfänger reflektiert werden. Die Auswerteeinheit kann anhand der gemessenen Laufzeit oder Phasenverschiebung der an den mindestens zwei Referenzflächen reflektierten Ultraschall-Referenzsignale die Temperatur zwischen den mindestens zwei Referenzflächen sowie die Temperatur zwischen einer Referenzfläche und der Endfläche des Messendes ermitteln und so eine Temperaturkompensation bei der Laufzeitmessung mittels Ultraschalls auch dann ermöglichen, wenn.zwischen Referenz- und Messstrecke ein nennenswerter Temperaturgradient vorliegt.

Um den Einfluss von Montagestress auf Referenz- und Messstrecke zu minimieren, kann der Messkörper einen Flansch aufweisen, der über eine Spannschraube in einer Behälteröffnung verspannt ist und von dem das Messende des Messkörpers zusätzlich über einen Absatz abgesetzt ist.

Die Erfindung betrifft in einem weiteren Aspekt auch ein zugehöriges Ultraschallmessverfahren zur Bestimmung der Länge eines Messkörpers mittels Puls-Echo mit den Merkmalen von Anspruch 12.

Weitere Vorteile und vorteilhafte Ausgestaltungen des Gegenstands der Erfindung sind der Beschreibung, der Zeichnung und den Ansprüchen entnehmbar.

### Zeichnungen

Nachstehend wird die Erfindung anhand mehrerer in der Zeichnung stark schematisiert wiedergegebenen Ausführungsbeispiele näher erläutert, wobei die gezeigten Abmessungen nicht maßstäblich zu verstehen sind.

Es zeigen:
- Fig. 1: einen stark schematisierten Längsschnitt einer erfindungsgemäßen ultraschallbasierten Messvorrichtung zur Bestimmung des in einem Hochdruckbehälter herrschenden Drucks;
- Fig. 2: ein zweites Ausführungsbeispiels einer erfindungsgemäßen ultraschällbasierten Messvorrichtung zur Bestimmung des in einem Hochdruckbehälter herrschenden Drucks in einem Längsschnitt; und
- Fig.3: eine gegenüber den Fign. 1 und 2 modifizierte Befestigung der ultraschallbasierten Messvorrichtung.

### Beschreibung der Ausführungsbeispiele

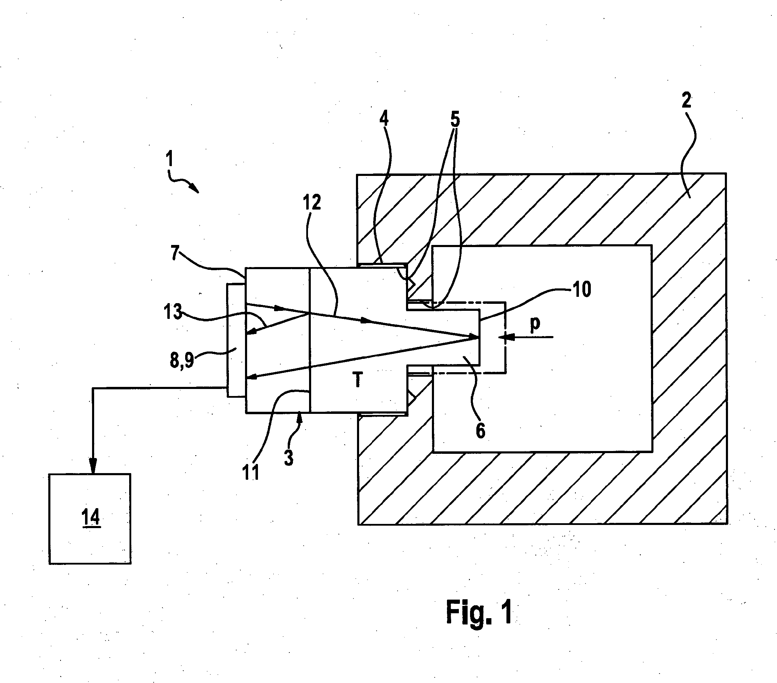

Die in **Fig. 1** gezeigte ultraschallbasierten Messvorrichtung **1** dient zur indirekten. Messung des in einem Druckbehälter **2** herrschenden Drucks **p**. Der Druckbehälter 2 kann beispielsweise ein Kraftstoff-Hochdruckspeicher (Common-Rail) eines Kraftstoffeinspritzsystems für Verbrennungsmotoren, in dem der Betriebsdruck üblicherweise weit über 2000 bar liegt, oder ein Hydraulikdruckbehälter eines Hydrauliksystems einer Bremsanlage sein.

Die Messvorrichtung 1 weist einen im Wesentlichen schraubenförmigen Messkörper **3** aus Metall auf, der mit einem Außengewinde-Befestigungsabschnitt **4** in eine mit Gewinde versehene Behälteröffnung **5** des Druckbehälters 2 druckdicht eingeschraubt ist und sich mit einem freien Messende **6** durch die Behälteröffnung 5 in den Druckbehälter 2 hinein erstreckt. Das Messende 6 ist also mit dem im Druckbehälter 2 herrschenden Betriebsdruck beaufschlagt und dadurch gegenüber seinem drucklosen Ausgangszustand, der gestrichelt angedeutet ist, verformt.

An der dem freien Messende 6 abgewandten Stirnfläche **7** des Messkörpers 3 sind ein Ultraschallsender **8** zum Einkoppeln von Ultraschallsignalen (Ultraschallpulsen) in den Messkörper 3 und ein Ultraschallempfänger **9** zur Detektion der an der Endfläche **10** des Messendes 6 reflektierten Ultraschall-Messsignale angeordnet. Ultraschallsender und Ultraschallempfänger 8, 9 können gemeinsam durch einen Ultraschalltransducer gebildet sein. Außerhalb seines messdruckbeaufschlagten Messendes 6 weist der Messkörper 3 eine nicht-messdruckbeaufschlagte Referenzfläche **11** auf, an der ein Teil der vom Ultraschallsender 8 ausgesandten Ultraschallsignale als Referenzsignale zurück zum Ultraschallempfänger 9 reflektiert werden. Die Referenzfläche 11 kann durch einen Einschnitt im Messkörper 3 oder durch eine Klebeverbindung ausgebildete innere Grenzschicht des Messkörpers 3 gebildet sein. Die Referenzfläche 11 ist zwischen dem Ultraschallsender 8 und dem Befestigungsabschnitt 4 vorgesehen und verläuft im gezeigten Ausführungsbeispiel parallel zur Stirnfläche 7 und zur Endfläche 10.

Die von den Messsignalen durchlaufene Messstrecke ist mit **12** und die von den Referenzsignalen durchlaufene Referenzstrecke mit **13** bezeichnet. Die gemessene Messlaufzeit oder -phasenverschiebung eines am druckbeaufschlagten Messende 6 reflektierten Messsignals ist abhängig von der Temperatur **T** der Messtrecke 12 und dem an der Endfläche 10 herrschenden Druck p, während die gemessene Referenzlaufzeit oder -phasenverschiebung eines an der Reflexionsfläche 11 reflektierten Referenzsignals nur von der Temperatur T der Referenzstrecke 13 abhängig ist. Da der Messkörper 3 aus hochwärmeleitfähigem Material, wie z.B. Kupfer, gebildet ist und die Mess- und Referenzstrecken 12, 13 nahe nebeneinander verlaufen, weisen die Mess- und Referenzstrecken 12, 13 die gleiche Temperatur T auf.

Die Ultraschall-Laufzeit durch die Referenzstrecke 13 bekannter Länge dient als Zeitbasis und ersetzt die normalerweise verwendete Quarzpräzisionsbasis. Diese Referenzlaufzeit skaliert mit der Temperatur T, und diese Skalierung entspricht genau der Skalierung der Messlaufzeit durch die mit dem Messdruck p beaufschlagte Messstrecke 12. Wird die Messlaufzeit durch Quotientenbildung auf die Referenzstrecke 13 bezogen, erhält man ein temperaturunabhängiges bzw. -kompensiertes Druckmesssignal. Druckbedingte Laufzeitänderungen der Ultraschallsignale über die Messstrecke 12 können so unabhängig vom Temperaturgang der Messstrecke 12 erfasst werden, wodurch eine temperaturkompensierte und daher zuverlässige Bestimmung des Messdrucks p möglich ist.

Mit dem Ultraschalltransducer ist eine Auswerteeinheit **14** verbunden, die anhand der gemessenen Messlaufzeit oder -phasenverschiebung des am Messende 6 reflektierten Messsignals und der gemessenen Referenzlaufzeit oder - phasenverschiebung des an der Referenzfläche 11 reflektierten Referenzsignals die temperaturkompensierte Laufzeit oder Phasenverschiebung des Messsignals und daraus bei bekannter Schallgeschwindigkeit des Messkörpers 3 die temperaturkompensierte Länge des Messkörpers 3 und dann den am Messende 6 herrschenden Messdruck p anhand bekannter Längen-Messdruck-Referenzkurven ermittelt.

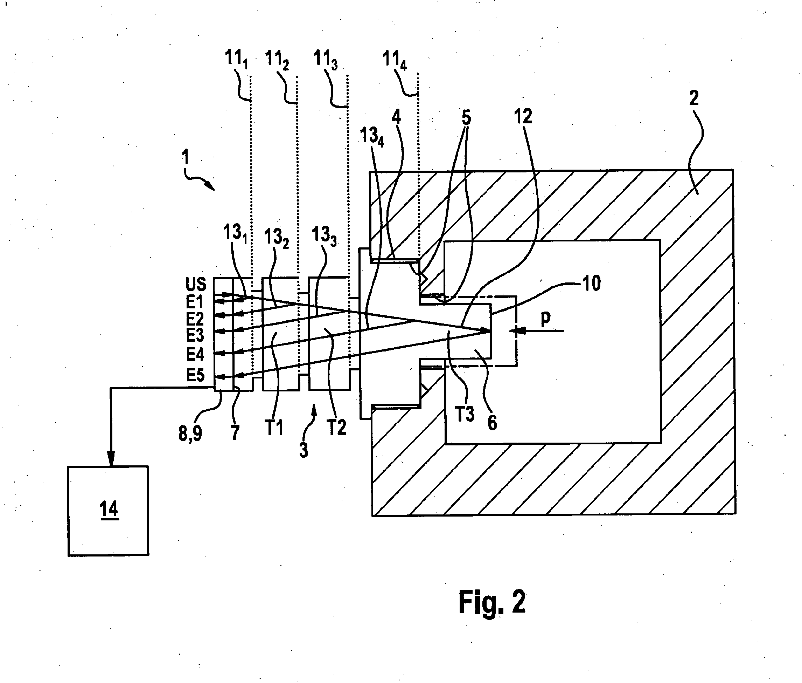

Von der Messvorrichtung der Fig. 1 unterscheidet sich die in **Fig. 2** gezeigte eine Messvorrichtung 1 einzig dadurch, dass hier zwischen der Endfläche 10 des Messkörpers 3 und dem Ultraschallsender und -empfänger 8, 9 nicht eine, sondern vier Referenzflächen **11₁, 11₂, 11₃, 11₄** vorgesehen sind. Durch Aufteilung in mehrere Referenzstrecken **13₁, 13₂, 13₃, 13₄** mit jeweiligem Echo kann der Temperaturgradient in den Referenzstrecken ermittelt werden, nämlich im gezeigten Ausführungsbeispiel die Temperatur **T1** zwischen den beiden Referenzflächen 11₁ und 11₂ sowie die Temperatur **T2** zwischen den beiden Referenzflächen 11₂ und 11₃. Die Temperatur **T3** zwischen der vierten Referenzflächen 11₄ und der Endfläche 10 kann dann über die Beziehung T3 = T1 + A *(T2 - T1) errechnet werden. A ist hierbei ein durch einmaligen Abgleich zu ermittelnder Korrelationsfaktor, der die Temperatur T3 mit den Temperaturen T1 und T2 korreliert. Das Verfahren ist natürlich nur dann korrekt, wenn für alle thermischen Randbedingungen am Einbauort der Temperaturverlauf in Referenz- und Messstrecke ähnlich, d.h. A eine Konstante ist. Thermische Simulationen zeigen, dass diese Voraussetzung bei Anwendung auf einen Raildrucksensor erfüllt ist. Der Korrelationsfaktor A kann ermittelt werden, indem bei nicht-druckbeaufschagtem Messende 6 beispielsweise nur das Messende 6 erwärmt wird, so dass sich im Messkörper 3 ein Temperaturgradient ausbildet (T₃ > T₂ > T₁), und gleichzeitig die Temperaturen T₁, T₂, T₃ gemessen werden.

Der vom Ultraschallsender 8 erzeugte Ultraschallpuls **US** wird zunächst teilweise an den Störungen, welche die erste, zweite und dritte Referenzfläche 11₁,11₂, 11₃ definieren, reflektiert, wodurch drei Echos **E1**, **E2** und **E3** erzeugt werden. In analoger Weise entstehen die Echos **E4** und **E5** durch Reflektion des Ultraschallpulses US an der vierten Referenzfläche 11₄, die durch den Querschnittssprung zum eigentlichen Messende 6 gebildet ist, und an der mediumseitigen Endfläche 10.

Bei nicht-druckbeaufschagtem Messende 6 werden in einer Kalibriermessung, in der im Messkörper 3 eine einheitliche Kalibriertemperatur und folglich kein Temperaturgradient herrscht, die Laufzeitdifferenzen zwischen den Echos E1 und E2, E2 und E3 sowie E4 und E5 gemessen und daraus die Kalibrierlängen der Referenzstrecken 13₂, 13₃, 13₄ für diese Kalibiertemperatur ermittelt. Kalibrierwerte bei anderen einheitlichen Temperaturen des Messkörpers 3 können entweder ebenfalls gemessen oder mittels des thermischen Ausdehnungskoeffizienten berechnet werden.

Zur Ermittlung der druckbedingten Längen bzw. -änderungen werden die Laufzeitdifferenzen zwischen den Echos E1 und E2, E2 und E3 sowie E4 und E5 ausgewertet. Die Laufzeiten der Echos E1 bis E4 bzw. die zugehörigen Längen der Referenzstrecken 13₂ bis 13₄ sind temperaturabhängig, aber unabhängig vom Messdruck p, während das Echo E5 bzw. die zugehörige Länge der Messstrecke 12 temperatur- und druckabhängig ist.
Die Vorlaufstrecke, die das Echo E1 liefert, dient hier zur Definition einer Zeit-basis, um bei der Auswertung der Laufzeitdifferenzen von Verzögerungen und anderen Störungen bei der Pulserzeugung im Ultraschallsender 8 unabhängig zu werden.
Durch Vergleich der gemessenen Laufzeiten bzw. Längen sowohl mit den Kalibrierwerten als auch miteinander kann in der Auswerteeinheit 14 auf die Temperatur T1 zwischen den beiden Referenzflächen 11₁ und 11₂ sowie auf die Temperatur T2 zwischen den beiden Referenzflächen 11₂ und 11₃ und mittels des Korrelationsfaktors A auch auf die Temperatur T3 zwischen der Referenzflächen 11₄ und der Endfläche 10 geschlossen werden. Mit Kenntnis der Temperatur T3 kann die temperaturbedingte Längenänderung der Messstrecke 12 ermittelt und aus der gemessenen Länge herausgerechnet werden, um so die druckbedingte Längenänderung zu erhalten und daraus den temperaturbereinigten Raildruck p abzuleiten. Die benachbarten Referenzflächen 11₁,11₂, 11₃, 11₄ sind ausreichend weit voneinander beabstandet, damit sich die Echopulse am Ultraschallempfänger 9 nicht überlagern, sondern zeitlich aufgelöst werden können.

Die in Fig. 2 gezeigte Messvorrichtung 1 ermöglicht also die Temperaturkompensation bei der Laufzeitmessung mittels Ultraschalls auch dann, wenn zwischen der Messstrecke 12 und den Referenzstrecken 13₁,13₂, 13₃, 13₄ ein nennenswerter Temperaturgradient vorliegt.

Die in Fign. 1 und 2 eingezeichneten "Schallpfeile" dienen nur der groben Verdeutlichung der Reflektionen und stellen nicht den tatsächlichen Verlauf der Schallwellen dar.

In den Fign. 1 und 2 ist der Messkörper 3 ein Einschraubstutzen, der in die Behälteröffnung 5 eingeschraubt ist. Hierdurch kann insbesondere bei zu hoher Verspannung ein Feld mechanischer Spannungen im Messkörper 3 erzeugt werden, das sich unter Umständen bis in den Bereich der Mess- und Referenzstrecken ausdehnt und somit die Schallausbreitung beeinflusst. Dies kann insbesondere bei unterschiedlichen Materialien von Druckbehälter bzw. Rail 2 und Messkörper 3 zu unerwünschtem TKO (Temperaturkoeffizient-Offset) und über Relaxation der Vorspannkraft auch zu einer Offsetdrift führen.

Um den Einfluss eines solchen Spannungsfelds auf die Messung zu eliminieren, wird, wie in Fig. 2 gezeigt, zur Ermittlung der Temperatur T3 nicht die Laufzeitdifferenz zwischen den Echos E3 und E5, sondern die Laufzeitdifferenz zwischen den Echos E4 und E5 ausgewertet. Für die Ermittlung der Temperaturen T₁, T₂, T₃ ist in diesem Fall neben den beiden Referenzflächen 11₂, 11₃ noch die weitere Referenzfläche 11₄ erforderlich.

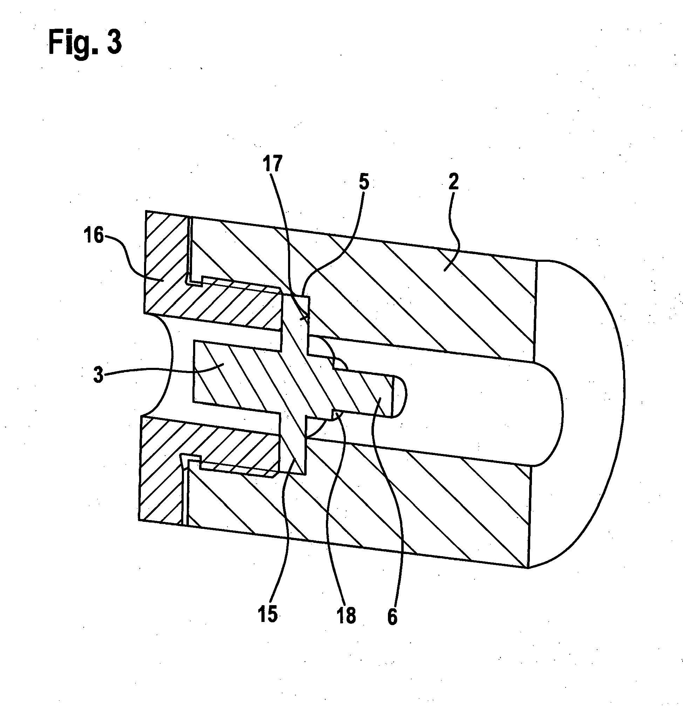

In **Fig. 3** ist daher eine alternative Befestigung des Messkörpers 3 dargestellt, um den genannten Einfluss der Vorspannung zu minimieren. Dazu weist der Messkörper 3 einen möglichst schmalen Spannflansch **15** ohne eigenes Gewinde auf, der mittels einer Spannschraube **16** gegen einen Absatz **17** der Behälteröffnung 5 druckdicht verspannt wird. Zusätzlich ist das Messende 6 durch einen Durchmessersprung bzw. Absatz **18** weiter vom Flansch 15 abgesetzt. Die Referenzfläche 11₃ von Fig. 2 sollte vorteilhaft vom Flansch um das gleiche Maß in die entgegengesetzte Richtung abgesetzt sein wie der Absatz 18 in Fig. 3, wenn die Methode der Kompensation eines Temperaturgradienten mit dem Aufbau zur Minimierung des Vorspannungseinflusses kombiniert werden soll. Aufgrund dieser spannungsminimierten Befestigung des Messkörpers 3 sind für die Ermittlung der Temperaturen T₁, T₂, T₃ in diesem Fall die beiden Referenzflächen 11₂ und 11₃ ausreichend und die weitere Referenzfläche 11₄ nicht erforderlich.

## Patentansprüche

1. Ultraschallbasierte Messvorrichtung (1) mit einem Messkörper (3), der ein Messende (6) aufweist, mit mindestens einem Ultraschallsender (8) zum Einkoppeln von Ultraschall-Messsignalen in den Messkörper (3) und mit mindestens einem Ultraschallempfänger (9) zur Detektion der an einer Endfläche (10) des Messendes (6) reflektierten Ultraschall-Messsignale, **dadurch gekennzeichnet,**
**dass** der Messkörper (3) außerhalb seines messdruckbeaufschlagbaren Messendes (6) mindestens eine nicht-messdruckbeaufschlagte Referenzfläche (11; 11₁, 11₂, 11₃, 11₄) aufweist, an der vom mindestens einen Ultraschallsender (8) ausgesandte Ultraschall-Referenzsignale zum mindestens einen Ultraschallempfänger (9) reflektiert werden.

2. Messvorrichtung nach Anspruch 1, **dadurch gekennzeichnet, dass** die mindestens eine Referenzfläche (11; 11₁, 11₂, 11₃, 11₄) durch eine End- oder Grenzfläche des Messkörpers (3), insbesondere durch einen Einschnitt, eine Einschnürung und/oder eine Kante im Messkörper (3), gebildet ist.

3. Messvorrichtung nach Anspruch 1 oder 2, **dadurch gekennzeichnet, dass** der Messkörper (3) zwischen dem Ultraschallsender (8) und dem Messende (6) einen Befestigungsabschnitt (4) aufweist und dass die mindestens eine Referenzfläche (11; 11₁, 11₂, 11₃, 11₄) zwischen dem Ultraschallsender (8) und dem Befestigungsabschritt (4) vorgesehen ist.

4. Messvorrichtung nach einem der vorhergehenden Ansprüche, **dadurch gekennzeichnet, dass** die von den Ultraschall-Messsignalen durchlaufene Messstrecke (12) und die von den Referenz-Ultraschallsignalen durchlau-fene Referenzstrecke (13) im Betrieb der Messvorrichtung (1) die gleiche Temperatur (T) aufweisen.

5. Messvorrichtung nach einem der vorhergehenden Ansprüche, **dadurch gekennzeichnet, dass** der Messkörper (3) aus ausreichend wärmeleitfähigem Material, insbesondere Stahl oder Aluminium, gebildet ist.

6. Messvorrichtung nach einem der vorhergehenden Ansprüche, **gekennzeichnet durch** eine Auswerteeinheit (14), die anhand der gemessenen Laufzeit oder Phasenverschiebung eines am Messende (6) reflektierten Ultraschall-Messsignals und der gemessenen Laufzeit oder Phasenverschiebung eines an der mindestens einen Referenzfläche (11; 11₁, 11₂, 11₃, 11₄) reflektierten Ultraschall-Referenzsignals die temperaturkompensierte Laufzeit oder Phasenverschiebung des Messsignals, und insbesondere daraus die temperaturkompensierte Länge des Messkörpers (3) und/oder den am Messende (6) herrschende Messdruck (p), ermittelt.

7. Messvorrichtung nach einem der vorhergehenden Ansprüche, **dadurch gekennzeichnet, dass** der Messkörper (3) außerhalb seines messdruckbeaufschlagbaren Messendes (6) mindestens zwei nicht-messdruckbeaufschlagte Referenzflächen (11₁, 11₂, 11₃, 11₄) aufweist, an denen vom mindestens einen Ultraschallsender (8) ausgesandte Ultraschall-Referenzsignale (E1-E4) zum mindestens einen Ultraschallempfänger (9) reflektiert werden.

8. Messvorrichtung nach Anspruch 7, **gekennzeichnet durch** eine Auswerteeinheit (14), die anhand der gemessenen Laufzeit oder Phasenverschiebung der an den mindestens zwei Referenzflächen (11₁, 11₂, 11₃, 11₄) reflektierten Ultraschall-Referenzsignale (E1-E4) die Temperatur (T1, T2) zwischen den mindestens zwei Referenzflächen (11₁, 11₂, 11₃, 11₄) sowie die Temperatur (T3) zwischen einer Referenzfläche (11₁, 11₂, 11₃, 11₄) und der Endfläche (10) des Messendes (6) ermittelt.

9. Messvorrichtung nach einem der vorhergehenden Ansprüche, **dadurch gekennzeichnet, dass** der Messkörper (3) einen Sparinflansch (15) aufweist.

10. Messvorrichtung nach Anspruch 9, **dadurch gekennzeichnet, dass** das Messende (6) des Messkörpers (3) über einen Absatz (18) vom Spannflansch (15) abgesetzt ist.

11. Druckbehälter (2), insbesondere eines Kraftstoffeinspritzsystems für Verbrennungsmotoren oder eines Hydrauliksystems einer Bremsanlage, mit einer am Druckbehälter (2) angeordneten Messvorrichtung (1) nach einem der vorhergehenden Ansprüche, wobei der Messkörper (3) mit seinem Messende (6) in den Druckbehälter (2) hineinragt.

12. Ultraschallmessverfahren zur Bestimmung insbesondere der Länge eines Messkörpers (3) mittels Puls-Echo, wobei die Laufzeit eines in den Messkörper (3) eingekoppelten Ultraschall-Messsignals bis zum Empfang des an einem Messende (6) des Messkörpers (3) reflektierten Ultraschall-Messsignals oder dessen Phasenverschiebung gemessen wird, **dadurch gekennzeichnet,**
**dass** zusätzlich die Laufzeit eines in den Messkörper (3) eingekoppelten Ultraschall-Referenzsignals bis zum Empfang des an mindestens einer außerhalb des messdruckbeaufschlagten Messendes (6) vorgesehenen, nicht-messdruckbeaufschlagten Referenzfläche (11; 11₁, 11₂, 11₃, 11₄) des Messkörpers (3) reflektierten Ultraschall-Referenzsignals oder dessen Phasenverschiebung gemessen wird, und
**dass** aus den beiden gemessenen Laufzeiten bzw. Phasenverschiebungen eine temperaturkompensierte Laufzeit bzw. Phasenverschiebung des Messsignals und daraus eine temperaturkompensierte Länge des Messkörpers (3) ermittelt wird.

13. Ultraschallmessverfahren nach Anspruch 12, **dadurch gekennzeichnet, dass** aus der temperaturkompensierten Laufzeit bzw. Phasenverschiebung des Messsignals oder aus der temperaturkompensierten Länge des Messkörpers (3) der am Messende (6) des Messkörpers (3) herrschende Messdruck (p) ermittelt wird.

14. Ultraschallmessverfahren nach Anspruch 12 oder 13, **dadurch gekennzeichnet, dass** das in den Messkörper (3) eingekoppelte Ultraschall-Messsignal an mindestens zwei nicht-messdruckbeaufschlagten Referenzflächen (11₁, 11₂, 11₃, 11₄) des Messkörpers (3) reflektiert wird und dass anhand der gemessenen Laufzeit oder Phasenverschiebung der an den mindestens zwei Referenzflächen (11₁, 11₂, 11₃, 11₄) reflektierten Ultraschall-Referenzsignale (E1-E4) die Temperatur (T1, T2) zwischen den mindestens zwei Referenzflächen (11₁, 11₂, 11₃, 11₄) sowie die Temperatur (T3) zwischen einer Referenzfläche (11₁, 11₂, 11₃, 11₄) und des Messendes (6) ermittelt wird und unter Berücksichtigung der ermittelten Temperaturen eine temperaturkompensierte Länge des Messkörpers (3) ermittelt wird.

## Claims

1. Ultrasonic measuring device (1) having a measuring element (3) which has a measuring end (6), having at least one ultrasonic transmitter (8) for coupling ultrasonic measuring signals into the measuring element (3), and having at least one ultrasonic receiver (9) for detecting ultrasonic measuring signals reflected at an end face (10) of the measuring element (6),
**characterized in that**
outside its measuring end (6), to which measuring pressure is applied, the measuring element (3) has at least one reference face (11; 11₁, 11₂, 11₃, 11₄) to which measuring pressure is not applied, at which ultrasonic reference signals emitted by the at least one ultrasonic transmitter (8) are reflected to the at least one ultrasonic receiver (9).

2. Measuring device according to Claim 1, **characterized in that** the at least one reference face (11; 11₁, 11₂, 11₃, 11₄) is formed by an end face or boundary face of the measuring element (3) in particular by an incision, a constriction and/or an edge in the measuring element (3).

3. Measuring device according to Claim 1 or 2, **characterized in that** the measuring element (3) has a fixing section (4) between the ultrasonic transmitter (8) and the measuring end (6), and **in that** the at least one reference face (11; 11₁, 11₂, 11₃, 11₄) is provided between the ultrasonic transmitter (8) and the fixing section (4).

4. Measuring device according to one of the preceding claims, **characterized in that** the measuring section (12) through which the ultrasonic measuring signals pass and the reference section (13) through which the reference ultrasonic signals pass have the same temperature (T) during the operation of the measuring device (1).

5. Measuring device according to one of the preceding claims, **characterized in that** the measuring element (3) is formed from sufficiently thermally conductive material, in particular steel or aluminium.

6. Measuring device according to one of the preceding claims, **characterized by** an evaluation unit (14) which, by using the measured propagation time or phase shift of an ultrasonic measuring signal reflected at the measuring end (6) and the measured propagation time or phase shift of an ultrasonic reference signal reflected at the at least one reference face (11; 11₁, 11₂, 11₃, 11₄), determines the temperature-compensated propagation time or phase shift of the measuring signal and, in particular, determines from the latter the temperature-compensated length of the measuring element (3) and/or the measuring pressure (p) prevailing at the measuring end (6).

7. Measuring device according to one of the preceding claims, **characterized in that**, outside its measuring end (6) to which measuring pressure can be applied, the measuring element (3) has at least two reference faces (11₁, 11₂, 11₃, 11₄) to which measuring pressure is not applied, at which ultrasonic reference signals (E1-E4) emitted by the at least one ultrasonic transmitter (8) are reflected to the at least one ultrasonic receiver (9).

8. Measuring device according to Claim 7, **characterized by** an evaluation unit (14) which, by using the measured propagation time or phase shift of the ultrasonic reference signals (E1-E4) reflected at the at least two reference faces (11₁, 11₂, 11₃, 11₄), determines the temperature (T1, T2) between the at least two reference faces (11₁, 11₂, 11₃, 11₄) and also the temperature (T3) between a reference face (11₁, 11₂, 11₃, 11₄) and the end face (10) of the measuring end (6).

9. Measuring device according to one of the preceding claims, **characterized in that** the measuring element (3) has a clamping flange (15).

10. Measuring device according to Claim 9, **characterized in that** the measuring end (6) of the measuring element (3) is separated from the clamping flange (15) via a step (18).

11. Pressure vessel (2), in particular of a fuel injection system for internal combustion engines or of a hydraulic system of a braking system, having a measuring device (1) according to one of the preceding claims arranged on the pressure vessel (2), the measuring element (3) projecting with its measuring end (6) into the pressure container (2).

12. Ultrasonic measuring method for determining in particular the length of a measuring element (3) by means of pulse-echo, the propagation time of an ultrasonic measuring signal coupled into the measuring element (3) until the receipt of the ultrasonic measuring signal reflected at a measuring end (6) of the measuring element (3) or the phase shift of the said ultrasonic measuring signal being measured,
**characterized in that**
in addition the propagation time of an ultrasonic reference signal coupled into the measuring element (3) until the receipt of the ultrasonic reference signal reflected at at least one reference face (11; 11₁, 11₂, 11₃, 11₄) of the measuring element (3) to which measuring pressure is not applied but which is provided outside the measuring end (6) to which measuring pressure is applied or the phase shift of the said ultrasonic reference signal is measured, and
**in that**, from the two measured propagation times or phase shifts, a temperature-compensated propagation time or phase shift of the measuring signal and, from the latter, a temperature-compensated length of the measuring element (3) is determined.

13. Ultrasonic measuring method according to Claim 12, **characterized in that**, from the temperature-compensated propagation time or phase shift of the measuring signal or from the temperature-compensated length of the measuring element (3), the measuring pressure (p) prevailing at the measuring end (6) of the measuring element (3) is determined.

14. Ultrasonic measuring method according to Claim 12 or 13, **characterized in that** the ultrasonic measuring signal coupled into the measuring element (3) is reflected at at least two reference faces (11₁, 11₂, 11₃, 11₄) of the measuring element (3) to which measuring pressure is not applied, and **in that**, by using the measured propagation time or phase shift of the ultrasonic reference signals (E1-E4) reflected at the at least two reference faces (11₁, 11₂, 11₃, 11₄), the temperature (T1, T2) between the at least two reference faces (11₁, 11₂, 11₃, 11₄) and also the temperature (T3) between a reference face (11₁, 11₂, 11₃, 11₄) and the measuring end (6) is determined and, whilst taking the temperatures determined into account, a temperature-compensated length of the measuring element (3) is determined.

## Revendications

1. Dispositif de mesure (1) basé sur ultrasons, présentant
un corps de mesure (3) doté d'une extrémité de mesure (6),
au moins un émetteur (8) d'ultrasons qui injecte des signaux de mesure par ultrasons dans le corps de mesure (3) et
au moins un récepteur (9) d'ultrasons qui détecte les signaux de mesure par ultrasons réfléchis sur une surface d'extrémité (10) de l'extrémité de mesure (6), **caractérisé en ce que**
le corps de mesure (3) présente à l'extérieur de son extrémité de mesure (6) sur laquelle une pression de mesure peut être appliquée au moins une surface de référence (11; 11₁, 11₂, 11₃, 11₄) sur laquelle aucune pression de mesure n'est appliquée et sur laquelle des signaux d'ultrasons de référence émis par au moins un émetteur (8) d'ultrasons sont réfléchis en direction d'au moins un récepteur (9) d'ultrasons.

2. Ensemble de mesure selon la revendication 1, **caractérisé en ce que** la ou les surfaces de référence (11; 11₁, 11₂, 11₃, 11₄) sont formées par une surface d'extrémité ou limite du corps de mesure (3), en particulier par une entaille, un sillon et/ou une arête formés dans le corps de mesure (3).

3. Ensemble de mesure selon les revendications 1 ou 2, **caractérisé en ce que** le corps de mesure (3) présente une section de fixation (4) entre l'émetteur (8) d'ultrasons et l'extrémité de mesure (6) et **en ce que** la ou les surfaces de référence (11; 11₁, 11₂, 11₃, 11₄) sont prévues entre l'émetteur (8) d'ultrasons et la section de fixation (4).

4. Ensemble de mesure selon l'une des revendications précédentes, **caractérisé en ce que** le parcours de mesure (12) traversé par les signaux de mesure par ultrasons et le parcours de référence (13) traversé par les signaux d'ultrasons de référence présentent la même température (T) lorsque l'ensemble de mesure (1) est en fonctionnement.

5. Ensemble de mesure selon l'une des revendications précédentes, **caractérisé en ce que** le corps de mesure (3) est formé d'un matériau suffisamment thermoconducteur, en particulier l'acier ou l'aluminium.

6. Ensemble de mesure selon l'une des revendications précédentes, **caractérisé par** une unité d'évaluation (14) qui détermine le temps de parcours ou déphasage à température compensée du signal de mesure et en particulier la longueur du corps de mesure (3) et/ou la pression de mesure (p) compensée en température qui règne à l'extrémité de mesure (6) à partir du temps de parcours ou du déphasage mesuré pour un signal de mesure par ultrasons réfléchi à l'extrémité de mesure (6) et du temps de parcours ou déphasage mesuré sur un signal d'ultrasons de référence réfléchi sur la ou les surfaces de référence (11; 11₁, 11₂, 11₃, 11₄).

7. Ensemble de mesure selon l'une des revendications précédentes, **caractérisé en ce qu'**à l'extérieur de son extrémité de mesure (6) sur laquelle une pression peut être appliquée le corps de mesure (3) présente au moins deux surfaces de référence (11₁, 11₂, 11₃, 11₄) sur lesquelles aucune pression de mesure n'est appliquée et sur lesquelles des signaux d'ultrasons de référence (E1-E4) émis par le ou les émetteurs (8) d'ultrasons sont réfléchis en direction d'au moins un récepteur (9) d'ultrasons.

8. Ensemble de mesure selon la revendication 7, **caractérisé par** une unité d'évaluation (14) qui détermine la température (T1, T2) entre les deux ou plusieurs surfaces de référence (11₁, 11₂, 11₃, 11₄) ainsi que la température (T3) entre une surface de référence (11₁, 11₂, 11₃, 11₄) et la surface d'extrémité (10) de l'extrémité de mesure (6) à l'aide du temps de parcours ou du déphasage mesurés sur les signaux d'ultrasons de référence (E1-E4) réfléchis sur les deux ou plusieurs surfaces de référence (11₁, 11₂, 11₃, 11₄).

9. Ensemble de mesure selon l'une des revendications précédentes, **caractérisé en ce que** le corps de mesure (3) présente une bride de serrage (15).

10. Ensemble de mesure selon la revendication 9, **caractérisé en ce que** l'extrémité de mesure (6) du corps de mesure (3) est décalée par rapport à la bride de serrage (15) par l'intermédiaire d'un appendice (18).

11. Récipient (2) sous pression, en particulier système d'injection de carburant pour moteur à combustion interne ou d'un système hydraulique d'une installation de freinage, et présentant un ensemble de mesure (1) selon l'une des revendications précédentes disposé sur le récipient (2) sous pression, le corps de mesure (3) pénétrant dans le récipient (2) sous pression par son extrémité de mesure (6).

12. Procédé de mesure par ultrasons en vue de déterminer en particulier la longueur d'un corps de mesure (3) par échos d'impulsions, dans lequel le temps de parcours d'un signal d'ultrasons de mesure injecté dans le corps de mesure (3) jusqu'à la réception du signal d'ultrasons de mesure réfléchi à une extrémité de mesure (6) du corps de mesure (3) ou son déphasage sont mesurés,
**caractérisé en ce que**
le temps de parcours d'un signal d'ultrasons de référence injecté dans le corps de mesure (3) jusqu'à réception du signal d'ultrasons de référence réfléchi sur au moins une surface de référence (11; 11₁, 11₂, 11₃, 11₄) du corps de mesure (3) sur laquelle aucune pression de mesure n'est appliquée, prévue à l'extérieur de l'extrémité de mesure (6) sur laquelle une pression de mesure est appliquée, ou son déphasage, sont mesurés et
**en ce qu'**à partir des deux temps de parcours ou déphasages mesurés, un temps de parcours ou déphasage compensé en température du signal de mesure est déterminé, et par là une longueur compensée en température du corps de mesure (3).

13. Procédé de mesure par ultrasons selon la revendication 12, **caractérisé en ce que** la pression de mesure (p) qui règne sur l'extrémité de mesure (6) du corps de mesure (3) est déterminée à partir du temps de parcours ou du déphasage compensé en température du signal de mesure ou à partir de la longueur compensée en température du corps de mesure (3).

14. Procédé de mesure par ultrasons selon les revendications 12 ou 13, **caractérisé en ce que** le signal de mesure par ultrasons injecté dans le corps de mesure (3) est réfléchi sur au moins deux surfaces de référence (11₁, 11₂, 11₃, 11₄) du corps de mesure (3) et **en ce que** la température (T1, T2) entre les deux ou plusieurs surfaces de référence (11₁, 11₂, 11₃, 11₄) ainsi que la température (T3) entre une surface de référence (11₁, 11₂, 11₃, 11₄) l'extrémité de mesure (6) sont déterminées à l'aide du temps de parcours ou du déphasage mesurés sur les signaux d'ultrasons de référence (E1-E4) réfléchis sur les deux ou plusieurs surfaces de référence (11₁, 11₂, 11₃, 11₄), une longueur compensée en température du corps de mesure (3) étant déterminée en tenant compte des températures ainsi déterminées.
